# EUROPEAN PATENT SPECIFICATION

(11) **EP 4 472 757 B1**
(45) Date of publication and mention of the grant of the patent: **01.04.2026**
(21) Application number: 22709838.1
(22) Date of filing: 07.02.2022
(51) Int. Cl.: B01D 67/00, B01D 46/00, B01D 69/02, B01D 69/12, B01D 71/02

(54) **POROUS FILTER MEMBRANES COMPRISING A METALLIC BASED COATING WITH ANTI-VIRAL PROPERTIES**
PORÖSE FILTERMEMBRANEN MIT EINER BESCHICHTUNG AUF METALLBASIS MIT ANTIVIRALEN EIGENSCHAFTEN
MEMBRANES FILTRANTES POREUSES COMPRENANT UN REVÊTEMENT À BASE MÉTALLIQUE PRÉSENTANT DES PROPRIÉTÉS ANTIVIRALES

(43) Date of publication of application: 11.12.2024
(73) Proprietor: CTCV - Centro Tecnológico da Cerámica e do Vidro, 3025-307 Coimbra (PT); Universidade de Coimbra, 3004-531 Coimbra (PT); Smart Separations Portugal Unipessoal, Lda, 4700-312 Braga (PT); TEandM- Tecnologia e Engenharia de Materiais, Taveiro, 3045-508 Coimbra (PT)
(72) Inventor: SILVA, Francisco, 3025-307 Coimbra (PT); JORGE, Hélio, 3025-307 Coimbra (PT); HENNETIER, Luc, 3025-307 Coimbra (PT); DA FONSECA PIEDADE, Ana Paula, 3030-788 Coimbra (PT); GANDO DE AZEVEDO FERREIRA, Licínio Manuel, 3040-810 Coimbra (PT); DURÃES, Luísa Maria, 3030-790 Coimbra (PT); FREIRE VIEIRA, Maria Teresa, 3030-788 Coimbra (PT); MAGALHÃES MACEDO, Hugo Miguel, 4705-026 Braga (PT); ALCÂNTARA GONÇALVES, António José, 3045-508 Coimbra (PT); DAVID ALEXANDRE, Ricardo Jorge, 3045-508 Taveiro, Coimbra (PT); DOS SANTOS SOUSA, Marta Gomes, 3045-508 Coimbra (PT); VAZ MARTINS GARCIA DE OLIVEIRA, Gonçalo, 3030-330 Coimbra (PT); CARRUPT FERREIRA BORGES, Maria Cristina, 3030-037 Coimbra (PT)
(74) Representative: Couto, Cláudia
(86) International application number: PCT/PT2022/050005
(87) International publication number: WO 2023/149812

(56) References cited:
- WO-A1-2019/082001
- CN-B- 103 007 781
- JOE YUN HAENG ET AL: "Evaluation of Ag nanoparticle coated air filter against aerosolized virus: Anti-viral efficiency with dust loading", JOURNAL OF HAZARDOUS MATERIALS, ELSEVIER, AMSTERDAM, NL, vol. 301, 11 September 2015 (2015-09-11), pages 547 - 553, XP029307057, ISSN: 0304-3894, DOI: 10.1016/J.JHAZMAT.2015.09.017
- JUNG SUNGHOON ET AL: "Copper-Coated Polypropylene Filter Face Mask with SARS-CoV-2 Antiviral Ability", POLYMERS, vol. 13, no. 9, 22 April 2021 (2021-04-22), CH, pages 1367, XP055963175, ISSN: 2073-4360, DOI: 10.3390/polym13091367
- SZEKERES GERGO P. ET AL: "Copper-Coated Cellulose-Based Water Filters for Virus Retention", ACS OMEGA, vol. 3, no. 1, 31 January 2018 (2018-01-31), US, pages 446 - 454, XP055963172, ISSN: 2470-1343, Retrieved from the Internet <URL:http://pubs.acs.org/doi/pdf/10.1021/acsomega.7b01496> DOI: 10.1021/acsomega.7b01496

## Description

### Technical field

This application relates to a porous filter membrane and an assembly of porous filter membranes comprising a metallic based coating with virucidal properties, while maintaining the membrane porosity.

### Background art

SARS-CoV-2 indoor contamination could be reduced significantly, contributing to the decreasing of human exposure to infection, by a smart filtration of the air. The accomplishment of this objective depends on the material used to the inactivation of the virus and the filter characteristics, which should not imply a significant decrease in its permeability.

Different research works show several solutions to inactivate virus, most of all to be used in facial masks. The majority of works are based on metallic based materials as antiviral protection.

In the review denominated "In Progress and Perspective of Antiviral Protective Material", Advanced fibers,2020, 2, 123, Jialiang et al. reported the different materials for preparation of antiviral respiratory protective facial masks by impregnation of nanoparticles. Copper based metal is highlighted as protection into an N95 mask. Copper oxide nanoparticles are widely used due to their low price, great stability, and broad antibacterial properties. Antiviral respirator can be composed of four layers. The outer and inner layers have different fiber fineness, and CuO nanoparticles were evenly distributed on the surface of the fibers. Mazurkow et al. [Nanosized copper (oxide) on alumina granules for water filtration: effect of copper oxidation state on virus removal performance, Environ Sci Technol. 2020,54(2),1214] synthesized multi-phase CuxOy (CuO and Cu2O) hybrid materials by calcination in different atmospheres, and they also concluded that nanosized Cu2O has the best antiviral properties.

Saeed Behzadinasab, in "A surface Coating that rapidly inactivates SARS CoV-2", ACS Appl. Mater. Interfaces 2020, 12, 31, 34723, showed that in solid surfaces, using particles of copper(I) oxide mixed with polyurethane, could cause a swift and dramatic reduction of the infective behavior of SARS-CoV-2.

Viricidal effect against coronavirus SARS-CoV-2 of a silver nanocluster/silica composite sputtered coating was recently object of research, also for facial masks [Open Ceramics, 1, 2020, 100006]. The thin films were deposited in different types of materials (substrates), but the study did not refer the role of porosity of them and the possibility to maintain open pores after coating.

Most of the studies with copper used nanoparticles embedded in other materials. Only a research work concerning biological nanodevices using thin films based on nanostructured Cu deposited by RF sputtering was found, applied on nanoporous anodic alumina substrate (NAAS), but the target was to study its optical properties [Morphological and optical properties of ultra-thin Mohamed Shaban1 et al. in Micro & Nano Letters, 2016, Vol. 11, 6, 295].

Coating of ceramic filter membranes with silver using magnetron sputtering is known from CN 103 007 781.

Concerning patents, the documents that present similarities to the subject of the current patent are the following:
Document CN111270215 describes a metal filter membrane used to filter water and air, made by an ion beam, and a membrane preparation method. Copper, aluminum, chromium, nickel, and titanium can be the metal of the filter membrane. The thin film prepared by the ion beam method has a compact and uniform structure, high filtration accuracy. It can be used as a filter on air purifiers, water purifiers, and other equipment. It can also remove PM 2.5 from the air and impurities such as heavy metals, bacteria, viruses, and others from water and protect human health. However, this document does not provide any details regarding the metallic based layer's morphology and other characteristics.

Document WO 2016/131697 refers to a membrane to filter water and remove viruses, consisting of a polymer-based membrane having a copper layer that features high flow rates at low-pressure drops. Uniform, well-adhering metallic copper based on the porous substrate can be provided without an etching step when a surface of a porous polymeric substrate has a metallic silver-based coating and a metallic copper-based recoating a silver coating. The method to produce the membrane coating uses a soft-solution chemical synthesis method essentially.

### Summary

The present invention relates to a porous filter membrane comprising a thickness between 50 and 10,000 µm, pores with an average size distribution between 0.02 and 20 µm, and an anti-viral metallic based coating with a thickness between 50 nm and 3000 nm, as defined in claim 1.

In one embodiment the membrane thickness is between 200 and 5,000 µm.

The membrane is made of a ceramic material selected from aluminum oxides, zirconia oxides, iron oxides, copper oxides and their derivatives.

In one embodiment the pore distribution percentage in the porous filter membrane is between 20 - 60% of its surface area.

The anti-viral metallic based coating is selected from copper, its alloys and/or compounds.

In one embodiment the anti-viral metallic based coating is deposited by sputtering technique.

The invention also relates to an assembly of porous filter membranes, wherein the assembly comprises:
at least one outer microporous filter membrane (2) described in any of the claims 1 to 4;
and/or at least inner one nanoporous filter membrane (1) described in any of the claims 1 to 4;
mounted on a membrane support (4).

The at least one outer microporous filter membrane (2) and the at least one inner nanoporous filter membrane (1) comprise a thickness between 50 and 10,000 µm, pores with an average size distribution between 0.02 and 20 µm, and an anti-viral metallic based coating with a thickness between 50 nm and 3000 nm.

The at least one outer microporous filter membrane (2) and the at least one inner nanoporous filter membrane (1) is made of a ceramic material selected from aluminum oxides, zirconia oxides, iron oxides, copper oxides and their derivatives.

In one embodiment the pore distribution percentage of the at least one microporous filter membrane (2) and the at least one inner nanoporous filter membrane (1) is between 20 - 60% of their surface area.

The anti-viral metallic based coating (3) is selected from copper, its alloys and/or compounds.

In one embodiment the anti-viral metallic based coating (3) is deposited by sputtering technique.

In one embodiment the porous filter membrane is used in Heating, Ventilating and Air Conditioning systems, inspiratory and expiratory ports of ventilators, respiratory protection equipment and any other device or equipment suitable for retaining airborne viruses.

In one embodiment the assembly of porous filter membranes is used in Heating, Ventilating and Air Conditioning systems, inspiratory and expiratory ports of ventilators, respiratory protection equipment and any other device or equipment suitable for retaining airborne viruses.

### General Description

The present application discloses a new approach to air membrane filters for retaining and inactivating airborne viruses.

The present invention is a porous filter membrane and an assembly of porous membranes made of inorganic materials with an anti-viral metallic based coating. Each porous filter membrane is made of a ceramic material with pores from micrometer to nanometer range of size. An assembly can be constituted by inner coated porous filter membranes with or without outer membrane, respectively with nano- and micro-porosity, but both coated with an anti-viral metallic based material. In an assembly, the outer membrane is essential to retain particles larger than the virus delaying the pores clogging and increasing the time-life of the inner membrane. Since the outer membrane is coated, any virus or other microbes retained will also be inactivated. In this invention, it is crucial to maintain the porosity of the porous filter membranes after thin film deposition to allow the flux of air through the membrane. This procedure lets inactivate the virus in the membrane surface while avoiding Significant increase of pressure drop. Thus, it is essential to coat them with a nanocrystalline metallic based coating which has the highest surface area. It features anti-viral properties, but it must not be invasive of the internal pore walls during the coating by accurately defining the sputtering conditions.

The metallic based coating provided in the filter membrane(s) is be a copper-based material and is produced by sputtering in selected conditions.

The porous filter membrane and assemblies herein disclosed have high efficacy to inactivate virus such as the SARS-CoV-2 virus.

The main objective of the present invention is to increase as much as possible the stay of the virus on the reactive metallic based surface, while maintaining the permeability of the porous filter membranes. This solution contributes to retain the virus in the filter during the time necessary to inactivate it.

The porous filter membrane and assemblies of the present invention are suitable to be used in Heating, Ventilating and Air Conditioning systems (HVAC) systems, inspiratory and expiratory ports of ventilators used in infectious diseases health care units, respiratory protection equipment and any other device or equipment suitable for retaining airborne viruses.

### Brief description of drawings

For easier understanding of the application envisaged, figures are attached in the annex that represent the preferred forms of implementation which nevertheless are not intended to limit the technique disclosed herein.
Figure 1 shows a schematic representation of an assembly of porous filter membranes, 1- Nanoporous filter membrane; 2-microporous filter membrane; 3- anti-viral metallic based coating; 4- membrane support; 5- ambient air; 6- air with low concentration of micro particles; 7- air with low concentration of nano particles.
Figure 2 illustrates a surface-coated nanoporous filter membrane with a sputtered thin film of copper (Scanning Electron Microscopy - SEM).
Figure 3 shows a SEM image of the cross section of the nanoporous filter membrane after coating, confirming that the coating only reaches a very small depth from the surface.
Figure 4 illustrates the surface of a microporous filter membrane coated with sputtered copper, as observed by SEM.
Figure 5 shows the particle size distribution of a sample of air with an aerosol containing nanoparticles.
Figure 6 shows the particle size distribution of a sample of the same air from Figure 5 after going through the porous filter membrane of Figure 2.
Figure 7 shows the tests made on the inactivation capacity of copper coated filter membranes (micro and nano pore), for the SARS CoV-2 virus.
Figure 8 shows an example of a possible application for the membranes described. It's represented as kind of filter holder, designed for the nostrils of the nose, that could block airborne virus during inspiration, 8- membrane holder 9 - coated nanoporous filter membrane; 10- coated microporous filter membrane; 11- sealing rings.

### Description of embodiments

Now, preferred embodiments of the present application will be described in detail with reference to the annexed drawings.

The present application discloses porous filter membranes and assemblies of the same, for filtering air and retaining airborne particles, retaining and inactivating airborne viruses.

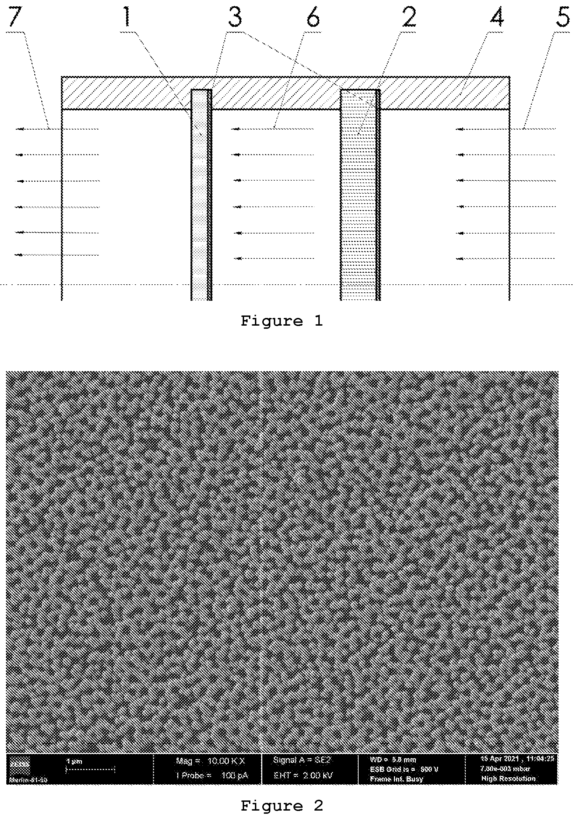

Figure 1 shows an assembly of the porous filter membrane of the present invention built comprising at least one micro porous outer filter membrane (2) and/or at least one nanoporous inner filter membrane (1) mounted on a membrane support (4), created specifically for this application, both with an anti-viral metallic based coating (3), deposited on their surface. The figure also shows the air flow through the assembly of porous filter membranes (5) (6) (7).

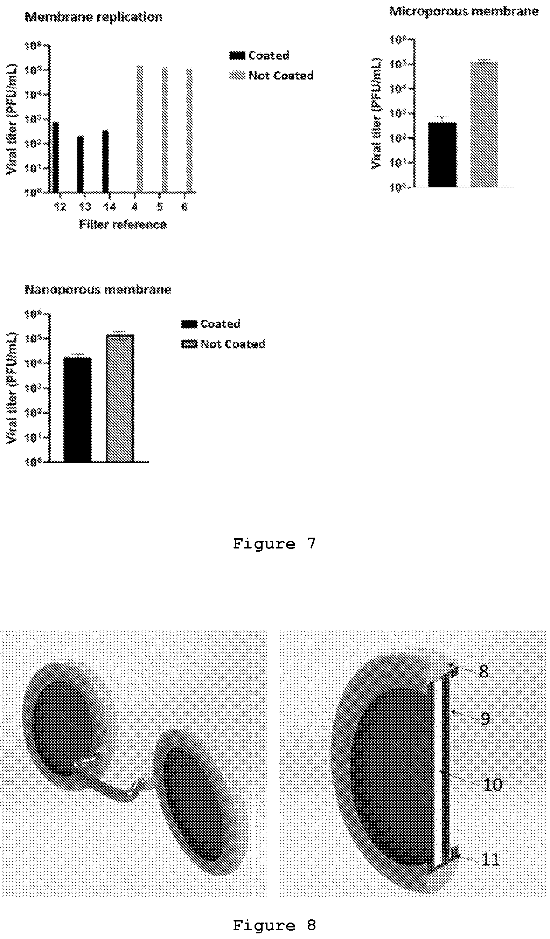

The schematics shown of this assembly are a simplification of the working principle. From this principle, design variations should be created to accommodate the application and improve the performance of existing systems. For example, for large scale applications, an assembly of multiple porous filter membranes, in both parallel and series configuration, should be considered, to better allow a proper airflow and ventilation efficiency, while respecting air quality standardizations (similar to HVAC filters). For human application, there could be a filtering system at the nostril of the nose that could block airborne virus during inspiration (Figure 8). Perhaps a more discrete solution to medical or N95 masks and with a better filtering capacity. In one embodiment, a single porous filter membrane is made of a ceramic material with different porosity sizes from ranging from micrometer to nanometer.

The porous filter membrane has a thickness between 50 and 10,000 µm, more preferably between 200 and 5,000 µm. The ceramic material of the porous filter membrane is selected from aluminum oxides (alumina), zirconia oxides, iron oxides, copper oxides.

The porous filter membrane comprises pores with an average size distribution between 0.02 and 20 µm. The pore distribution percentage is preferably between 20 - 60% of the porous filter membrane surface area.

The anti-viral metallic based coating provided in the porous filter membrane is selected from copper, its alloys and/or compounds.

The anti-viral metallic based coating has a thickness between 50 nm and 3000 nm.

The assembly of porous filter membranes comprises:
at least one outer microporous filter membrane (2);
and/or at least inner one nanoporous filter membrane (1);
mounted on a membrane support (4);
wherein the porous filter membranes comprise an anti-viral metallic based coating (3) on their surface.

The at least one outer microporous filter membrane (2) and the at least one inner nanoporous filter membrane (1) comprise a thickness between 50 and 10,000 µm, pores with an average size distribution between 0.02 and 20 µm, and an anti-viral metallic based coating with a thickness between 50 nm and 3000 nm.

The at least one outer microporous filter membrane (2) and the at least one inner nanoporous filter membrane (1) is made of a ceramic material selected from aluminum oxides, zirconia oxides, iron oxides, copper oxides and their derivatives.

In one embodiment the pore distribution percentage of the at least one microporous filter membrane (2) and the at least one inner nanoporous filter membrane (1) is between 20 - 60% of their surface area.

The material of the anti-viral metallic based coating (3) is selected from copper, its alloys and/or compounds.

In one embodiment the anti-viral metallic based coating (3) is deposited by sputtering technique.

The porous filter membrane is used in HVAC systems, inspiratory and expiratory ports of ventilators, respiratory protection equipment and any other device or equipment suitable for retaining airborne viruses.

The assembly of porous filter membranes is used in HVAC systems, inspiratory and expiratory ports of ventilators, respiratory protection equipment and any other device or equipment suitable for retaining airborne viruses.

The main objective of the present invention is to improve as much as possible the stay of the virus on the reactive metallic based coating, while maintaining the permeability of the porous filter membrane. This solution contributes to retain the virus in the porous filter membrane during the time necessary to inactivate it.

The anti-viral metallic based coating provided in the porous filter membrane is produced by sputtering, in selected conditions to avoid closing of the membrane's pores and maintain its permeability.

The solution of a sputtered metal, such as copper, on porous filter membrane allows to potentiate the virus inactivation by the activity of the metal into a "tridimensional array" with nanograins and other defects, and the efficiency of these porous filter membranes avoids the reappearance of virus in the environment.

Sputtering is the elective technique to create differences in the surface energy, surface topography and morphology of the metallic based layer deposited on the ceramic material (i.e., the substrate) of the porous filter membranes, whatever their porosity. This technique for selected conditions can deposit nanocrystalline thin films, with very high specific surface area, while not contributing to coat the internal surface of pores. The absence of coating inside the pores is an essential condition to avoid a significant decrease of the air flow through the filter.

In one embodiment, a high-density copper vapor flow obtained by dc/rf magnetron sputtering at suitable discharge power, depending on the sputtering equipment and with low temperature gradient along the pore length, is the solution to avoid the copper deposition into the whole pores, in nanoporous membranes, limiting the virus inactivation properties to the surface of the filter membranes. Moreover, the performance of this invention is not dramatically affected after a significant timework. Since the filtering process is made in a 2D surface and not in a 3D medium, the membrane thickness may be far thinner than conventional filters, while maintaining or even surpassing its filtering capabilities in a more compact or dense solution. Therefore, an appropriate filtering area is fundamental for achieving a good air flow efficiency for everyday air filtration applications.

Sputtering is comprised of three main phases that can be summarized in the following fundamental steps:
1- Transformation of the material being deposited (Target) into a gas state;
2- Vapor transportation between the target and the substrate;
3- Vapor condensation on the substrate surface and its corresponding coating formation.

An example of the metallic based coating sputtered deposition (DC/RF) is described. The deposition should be carried out using a metallic based target like the chemical composition of the coating selected. The substrates were micro/sub-micro/nano porous ceramic membranes; the coating thickness ranged from 50 to 3000 nm. Deposition parameters such as ultimate pressure, deposition pressure, power density, substrate bias, substrate rotation and slope were controlled to deposit nanocrystalline metallic based thin films on porous substrates without changing their porosity. As example, for thin copper film, the sputtering chamber was evacuated to an ultimate pressure of ~10⁻³Pa. The depositions of metallic based films, for example Cu, were carried out at 4 10⁻¹Pa, in an atmosphere of high purity Ar (99.999%), power density of 4x10⁴ W/m2 and for variable time, as a function of coating thickness. Furthermore, a substrate bias must be less than -100 V with 1.0 rpm rotation and a target-substrate distance of 50 mm. The support of the substrate allowed to vary its slope from 0 to 30°.

The porous filter membrane and their assemblies described herein showed high efficiency, above 90%, in filtering and inactivating virus while allowing for a good airflow.

### Examples:

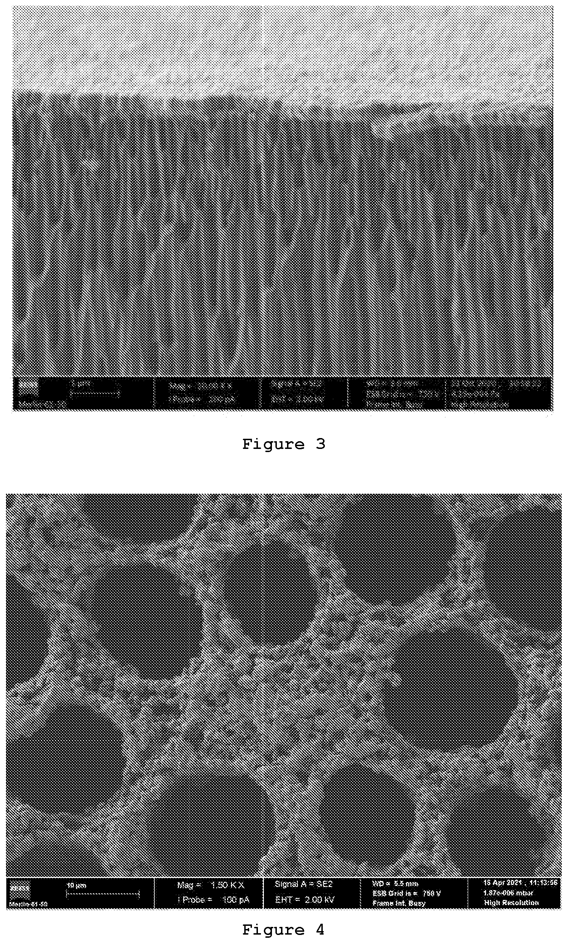

Figure 2 illustrates a nanoporous filter membrane surface-coated with a sputtered thin film of copper. The SEM image from Figure 3 shows the cross section of the nanoporous membrane after coating, confirming that the coating only reaches a very small depth from the surface. Figure 4 illustrates the surface of a microporous membrane coated with sputtered copper, as observed by SEM. By the significant difference of pore sizes between the micro and nanoporous membranes (compare Figures 2 and 4), it is clear that the first can be overlaid on the second without hindering the performance of the nanoporous membrane. Thus, the microporous membrane retains the larger particles while the viral nanoparticles that pass it will be captured by the nanoporous membrane, working the assembly in a synergistic way.

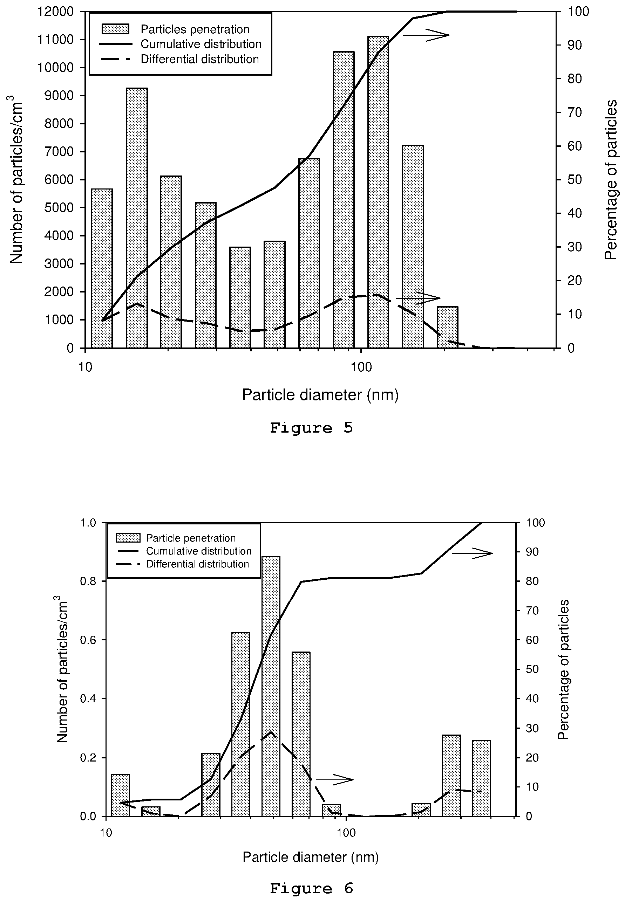

Figure 5 illustrates an aerosol particle size distribution containing nanoparticles with spherical shape and a full size range from 10 to 400 nm, with the main distribution between 80-140 nm.

After being filtered by the porous filter membrane of Figure 2, the number of particles in the feeding aerosol (Figure 5) is drastically reduced in all ranges of particle sizes, as illustrated in Figure 6.

Figure 7 illustrates the tests made on the inactivation capacity of copper coated membranes, for the SARS CoV-2 virus. For both, nanometer and micrometer pores-containing membranes, virus inactivation capacity has an efficiency above 90%, with the microporous membrane having better performance than the nanoporous membrane (~99%).

By comparing the results from Figure 5 and Figure 6, it's possible to identify a filtering efficiency of 99.99% of particles in the nanometer range. Along with the result shown in Figure 7, this further corroborates the efficiency of the present invention for SARS-CoV-2.

Figure 8 shows an example of a possible application for the membranes described. It's represented as kind of filter holder, designed for the nostrils of the nose, that could block airborne virus during inspiration

This description is of course not in any way restricted to the forms of implementation presented herein and any person with an average knowledge of the area can provide many possibilities for modification thereof without departing from the general idea as defined by the claims. The preferred forms of implementation described above can obviously be combined with each other. The following claims further define the preferred forms of implementation.

## Claims

1. A porous filter membrane comprising a thickness between 50 and 10,000 µm, pores with an average size distribution between 0.02 and 20 µm, and an anti-viral metallic based coating with a thickness between 50 nm and 3000 nm;
wherein the anti-viral metallic based coating is selected from copper, its alloys and/or compounds; and wherein the membrane is made of a ceramic material selected from aluminum oxides, zirconia oxides, iron oxides, copper oxides.

2. Porous filter membrane according to the previous claim, wherein the membrane thickness is between 200 and 5,000 µm.

3. Porous filter membrane according to any of the previous claims, wherein the pore distribution percentage in the porous filter membrane is between 20 - 60% of its surface area.

4. Porous filter membrane according to any of the previous claims, wherein the anti-viral metallic based coating is deposited by sputtering technique.

5. An assembly of porous filter membranes, wherein the assembly comprises:
at least one outer microporous filter membrane (2) described in any of the claims 1 to 4;
and/or at least one inner nanoporous filter membrane (1) described in any of the claims 1 to 4;
mounted on a membrane support (4).

6. Assembly of porous filter membranes according to claim 5, wherein the pore distribution percentage of the at least one microporous filter membrane (2) and the at least one inner nanoporous filter membrane (1) is between 20 - 60% of their surface area.

7. Assembly of porous filter membranes according to claims 5 to 6, wherein the anti-viral metallic based coating (3) is deposited by sputtering technique.

8. Use of the porous filter membrane described in any of the claims 1 to 4 in Heating, Ventilating and Air Conditioning systems, inspiratory and expiratory ports of ventilators, respiratory protection equipment and any other device or equipment suitable for retaining airborne viruses.

9. Use of the assembly of porous filter membranes described in any of the claims 5 to 7, in Heating, Ventilating and Air Conditioning systems, inspiratory and expiratory ports of ventilators, respiratory protection equipment and any other device or equipment suitable for retaining airborne viruses.

## Patentansprüche

1. Eine poröse Filtermembran, die eine Dicke zwischen 50 und 10.000 µm, Poren mit einer durchschnittlichen Größenverteilung zwischen 0,02 und 20 µm und eine antivirale Beschichtung auf Metallbasis mit einer Dicke zwischen 50 nm und 3000 nm aufweist;
wobei die antivirale Beschichtung auf Metallbasis aus Kupfer, seinen Legierungen und/oder Verbindungen ausgewählt wird;
und wobei die Membran aus einem keramischen Material hergestellt wird, das aus Aluminiumoxiden, Zirkonoxiden, Eisenoxiden oder Kupferoxiden ausgewählt wird.

2. Poröse Filtermembran nach dem vorhergehenden Anspruch, wobei die Dicke der Membran zwischen 200 und 5.000 µm liegt.

3. Poröse Filtermembran nach einem der vorhergehenden Ansprüche, wobei die prozentuale Porenverteilung in der porösen Filtermembran zwischen 20 - 60% ihres Oberflächenbereichs liegt.

4. Poröse Filtermembran nach einem der vorhergehenden Ansprüche, wobei die antivirale Beschichtung auf Metallbasis durch das Sputterverfahren aufgebracht wird.

5. Eine Anordnung poröser Filtermembranen, wobei die Anordnung Folgendes umfasst:
mindestens eine äußere mikroporöse Filtermembran (2), wie in einem der Ansprüche 1 bis 4 beschrieben;
und/oder mindestens eine innere mikroporöse Filtermembran (1), wie in einem der Ansprüche 1 bis 4 beschrieben;
auf einem Membranträger (4) montiert.

6. Anordnung poröser Filtermembranen nach Anspruch 5, wobei die prozentuale Porenverteilung von mindestens einer mikroporösen Filtermembran (2) und der mindestens einen inneren nanoporösen Filtermembran (1) zwischen 20 - 60% ihres Oberflächenbereichs liegt.

7. Anordnung poröser Filtermembranen nach den Ansprüchen 5 bis 6, wobei die antivirale Beschichtung auf Metallbasis (3) durch das Sputterverfahren aufgebracht wird.

8. Verwendung der porösen Filtermembran, wie in einem der Ansprüche 1 bis 4 beschrieben, in Heizungs-, Lüftungs -und Klimaanlagen-Systemen, Ein- und Ausatemanschlüssen von Beatmungsgeräten, Atemschutzgeräten sowie in sonstigen Vorrichtungen oder Einrichtungen, die zum Zurückhalten luftgetragener Viren geeignet sind.

9. Verwendung der Anordnung poröser Filtermembranen, wie in einem der Ansprüche 5 bis 7 beschrieben, in Heizungs-, Lüftungs -und Klimaanlagen-Systemen, Ein- und Ausatemanschlüssen von Beatmungsgeräten, Atemschutzgeräten sowie in sonstigen Vorrichtungen oder Einrichtungen, die zum Zurückhalten luftgetragener Viren geeignet sind.

## Revendications

1. Membrane filtrante poreuse comprenant une épaisseur comprise entre 50 et 10000 µm, des pores avec une distribution de taille moyenne comprise entre 0,02 et 20 µm, et un revêtement métallique à effet antiviral d'une épaisseur comprise entre 50 nm et 3000 nm ;
dans lequel le revêtement métallique à effet antiviral est choisi parmi le cuivre, ses alliages et/ou ses composés ;
et dans lequel la membrane est constituée d'un matériau céramique choisi parmi les oxydes d'aluminium, les oxydes de zirconium, les oxydes de fer et les oxydes de cuivre.

2. Membrane filtrante poreuse selon la revendication précédente, dans laquelle l'épaisseur de la membrane est comprise entre 200 et 5 000 µm.

3. Membrane filtrante poreuse selon l'une quelconque des revendications précédentes, dans laquelle le pourcentage de distribution des pores dans la membrane filtrante poreuse est compris entre 20 et 60 % de sa surface.

4. Membrane filtrante poreuse selon l'une quelconque des revendications précédentes, dans laquelle le revêtement métallique à effet antiviral est déposé par une technique de pulvérisation cathodique.

5. Ensemble de membranes filtrantes poreuses, dans lequel l'ensemble comprend :
au moins une membrane filtrante microporeuse externe (2) telle que décrite dans l'une quelconque des revendications 1 à 4 ;
et/ou au moins une membrane filtrante nanoporeuse interne (1) telle que décrite dans l'une quelconque des revendications 1 à 4 ;
montée sur un support de membrane (4).

6. Ensemble de membranes filtrantes poreuses selon la revendication 5, dans lequel le pourcentage de distribution des pores de la ou des membranes filtrantes microporeuses (2) et de la ou des membranes filtrantes nanoporeuses internes (1) est compris entre 20 et 60% de leur surface.

7. Ensemble de membranes filtrantes poreuses selon les revendications 5 à 6, dans lequel le revêtement métallique à effet antiviral (3) est déposé par la technique de pulvérisation cathodique.

8. Utilisation de la membrane filtrante poreuse décrite dans l'une quelconque des revendications 1 à 4, dans des systèmes de chauffage, ventilation et climatisation, les orifices inspiratoires et expiratoires des ventilateurs, les équipements de protection respiratoire et tout autre dispositif ou équipement apte à retenir les virus aéroportés.

9. Utilisation de l'ensemble de membranes filtrantes poreuses décrit dans l'une quelconque des revendications 5 à 7, dans des systèmes de chauffage, ventilation et climatisation, les orifices inspiratoires et expiratoires des ventilateurs, les équipements de protection respiratoire et tout autre dispositif ou équipement apte à retenir les virus aéroportés.
